(19) **Europäisches Patentamt / European Patent Office / Office européen des brevets**

(11) **EP 0 972 172 B1**

(12) **EUROPEAN PATENT SPECIFICATION**

(45) Date of publication and mention
of the grant of the patent:
**07.02.2007 Bulletin 2007/06**

(21) Application number: **98913535.5**

(22) Date of filing: **30.03.1998**

(51) Int Cl.:
***G01F 1/66*** *(2006.01)*    ***G01F 1/84*** *(2006.01)*

(86) International application number:
**PCT/DK1998/000130**

(87) International publication number:
**WO 1998/045671 (15.10.1998 Gazette 1998/41)**

(54) **CIRCUIT ARRANGEMENT FOR DERIVING THE MEASURED VARIABLE FROM THE SIGNALS OF SENSORS OF A FLOW METER**

SCHALTUNGSANORDNUNG ZUR ABLEITUNG EINER MESSVARIABLEN AUS DEN SIGNALEN EINES DURCHFLUSSMESSGERÄTS

AGENCEMENT DE CIRCUIT PERMETTANT DE DERIVER LA VARIABLE MESUREE A PARTIR DES SIGNAUX DE DETECTEURS D'UN DEBITMETRE

(84) Designated Contracting States:
**AT BE CH DE DK ES FI FR GB GR IE IT LI LU MC NL PT SE**

(30) Priority: **03.04.1997 DE 19713786**

(43) Date of publication of application:
**19.01.2000 Bulletin 2000/03**

(73) Proprietor: **Siemens Flow Instruments A/S**
**6430 Nordborg (DK)**

(72) Inventors:
- **HANSEN, Henning, Max**
  **DK-6400 Sonderborg (DK)**
- **VOSS, Frands, Wulff**
  **DK-6400 Sonderborg (DK)**
- **MONDRUP, Niels, Per**
  **DK-6440 Augustenborg (DK)**
- **WESTERMANN, Karsten**
  **DK-6400 Sonderborg (DK)**

- **MOOS, Hans, Jorgen**
  **DK-6430 Nordborg (DK)**
- **COLLIER, James, D.**
  **Cambs CB6 1SB (GB)**
- **SEWELL, Roger, F.**
  **Cambs CB3 9AW (GB)**
- **JANSEN, Richard-Jan, E.**
  **Cambs CB4 4BU (GB)**

(74) Representative: **Berg, Peter et al**
**Siemens AG**
**Corporate Intellectual Property**
**CT IP S AE**
**Postfach 22 16 34**
**80506 München (DE)**

(56) References cited:
| | |
|---|---|
| **WO-A-88/02105** | **DE-A- 4 319 344** |
| **US-A- 4 801 897** | **US-A- 5 024 104** |
| **US-A- 5 052 231** | **US-A- 5 429 002** |

**Description**

The invention relates to a circuit arrangement for deriving the measured variable from the signals of at least two sensors of a flow meter, which flow meter comprises a fluid line or several parallel fluid lines and means for exciting oscillations of a predetermined fundamental frequency in the fluid line(s), the sensors detecting the oscillations and the sensor signals being supplied by way of a respective A-D converter to a digital processing unit having a computation circuit in which their phase difference is determined as a measure of the flow, the circuit arrangement comprising the at least two sensors, the means for exciting oscillations and the processing unit.

DE 43 19 344 C2 discloses a method of measuring the phase difference in a Coriolis mass flow meter. In this case, sensor signals representing physical variables of the flow, the phase difference of which signals is to be determined as a measure of the flow, are transmitted by way of amplifiers, analogue low-pass filters and analogue-to-digital converters to a processing unit, in which the phase difference is calculated.

US-PS 5 555 190 discloses a circuit arrangement of the kind mentioned initially for a Coriolis flow meter in which two tubes are caused to oscillate in anti-phase. The oscillations are measured by sensors at different points of the tubes, the phase difference between the sensor signals being used as a measure of the flow. For that purpose, the circuit arrangement contains two channels, in each of which there is arranged an analogue-to-digital converter having downstream thereof a so-called "decimator", wherein the signals are subsequently passed through a digital rejection filter which allows all interference signals through apart from in a narrow stop frequency band around the fundamental frequency. This digitally filtered signal is subtracted from the original signal, in order to obtain a more accurate representation of the sensor signals. The stop frequency band of the filter is adjustable, the filter being controlled in accordance with an algorithm in such a way that it follows the changes in the fundamental frequency.

This method is suitable for measuring very small phase differences that occur in a Coriolis flow meter. The fundamental frequency of a flow meter is not constant, however. It is supposed to be changed in dependence on changes in the material properties of the tube and in the density of the fluid flowing through the flow meter. When the fundamental frequency is changed, the constants of the filter also have to be changed, in order to match the filter to the fundamental frequency. Changing of the filter constants produces a change in the output signal of the filter. A sudden change causes disturbance that falsifies the measurement signal. Only when the quiescent state has been reached, after matching to the fundamental frequency, do the measurements become reliable. In the interim period, they are seriously distorted and useless, and the measured flow is error-prone. That is why this method is not suitable for flow meters in which the fundamental frequency changes during operation.

US-PS 5,142,286 discloses an X-ray scintillator which has sigma-to-delta converters, downstream of which a so-called Hogenauer decimator is connected. The sigma-to-delta converters convert the analogue input signal at a high over-sampling frequency into a high-frequency digital signal. The downstream Hogenauer decimator scales down the sampling frequency of its input signal and suppresses high-frequency interference signals which occur during digitization.

The invention is based on the problem of providing a circuit arrangement of the kind mentioned in the preamble, which allows a more accurate detection of the flow regardless of changes in the fundamental frequency, combined with a simple construction.

In accordance with the invention, that problem is solved in that the processing unit between the A-D converter of each sensor signal and the computation circuit comprises a digital multiplier circuit and a digital filter arrangement downstream thereof, the digital sensor signals are multiplied in the multiplier circuit with respective digital signals phase-displaced by 90˚ with respect to one another that represent sinusoidal oscillations of identical amplitude and a frequency that varies by a slight difference frequency from the fundamental frequency, and the pass band of the filter arrangement is matched to the difference frequency.

This construction of the circuit arrangement enables the flow to be accurately calculated from the sensor signals of the flow meter without a change in the fundamental frequency falsifying the measurement result. The parameters of the filter arrangement can remain constant even when the fundamental frequency changes, provided that the pass band corresponds to the maximum possible difference frequency. Owing to the fact that multiplication is effected with approximately the same frequency, the difference frequency is very much lower than the original frequency. This simplifies construction. The circuit arrangement is suitable both for mass flow meters and for electromagnetic flow meters and other flow meters in which the measured value is derived from the phase angle and amplitudes of two sinusoidal signals.

The filter arrangement can comprise band-pass filters for the product signals resulting from the multiplication. Preferably, however, it comprises low-pass filters, which are connected downstream of a respective multiplying element of the multiplier circuit.

The A-D converter preferably contains a sigma-to-delta converter and a decimator connected downstream thereof. This enables the analogue sensor signals to be converted with a simple construction at very high sampling frequency and with little digitizing noise, whilst simultaneously reducing the repetition rate of the binary values produced in digitization, for matching to a lower clock rate of the computation circuit whilst maintaining the high measurement accuracy.

The decimators can comprise a Hogenauer circuit having a first matrix of digital integrators, followed by a corresponding second matrix of digital differentiating elements. This circuit enables the frequency of the bit sequence from the sigma-to-delta converter to be reduced. Here, a multiple integration of the serial bit sequence is followed by a corresponding multiple differentiation with simultaneous frequency division into lower-frequency parallel bit sequences.

In detail, it is possible for the first matrix to consist of m columns and n rows of integrators, each of which comprises an adder having a first and a second summing input, a carry input, a summation output and a carry output, the summation outputs being connected in each case to the first summing input of a following adder of the same row and the carry outputs of the adders of the same columns being connected in each case to the carry input of the adder of the next-higher bit position, and each integrator comprising a flip-flop having a data input and at least one output, the signal being transferred from the data input to the output of the flip-flop when a clock pulse at a clock input of the flip-flop changes value, and the summation output of the adder of the relevant integrator being connected to the data input, and the output of the flip-flop being connected to the second summing input of the adder of the same integrator. In this connection, the entire first matrix can be constructed from comparatively few, simple gates (logic elements). All gates can be in the form of integrated circuits on a single chip, since multipliers and memory space for filter coefficients are not required. The integrator matrix can nevertheless operate at very high speed.

The second matrix can consist of m columns and n rows of differentiating elements, each of which comprises an adder having two summing inputs, a carry input, a summation output and a carry output, the summation outputs being connected to a respective first summing input of a following adder of the same row and the carry outputs of the adders of the same columns being connected to the respective carry input of the adder of the next-higher bit position, and each differentiating element comprising a flip-flop having a data input and at least one output, the signal being transferred inverted from the data input to the output of the flip-flop when a clock pulse at a clock input of the flip-flop changes value, the data input of the flip-flop being connected to the first summing input of the adder of the relevant differentiating element and the output of the flip-flop being connected to the second summing input of the adder of the same differentiating element. This construction allows the differentiating matrix to be constructed from adders that operate by using the inverse outputs of the flip-flops and allocating a binary 1 as subtractor to the carry inputs of the adders of the lowest position. The differentiating matrix can therefore also be constructed from simple gates without multipliers and memory space for coefficients. In addition, they can advantageously be formed on the same chip as the integrator matrix.

It is preferably arranged that, in the first column of the first matrix, the first summing inputs of the adders, except for the adder of the lowest bit position, are connected to a common input for a serial bit sequence. The least-significant bit is always 1, since the serial bit sequence from the sigma-to-delta converter is taken to be +1 or -1. The higher-order bits supplied to the connected inputs of the higher-order adders have a sign prefix. Although three series-connected integrators produce a carry, this is not important when the adders operate for a subtraction with the two's complement to 1 and there are sufficient bits to represent the largest number occurring at the output.

Parallel bit patterns for +1 and -1 can be supplied to the inputs of the decimator in dependence on the instantaneous value for the serial bit sequence, -1 being entered as the two's complement to 1. Thus, only two values are entered, which represent the instantaneous logical output value of the sigma-to-delta converter. This value is entered in parallel, however, and during subsequent integration and differentiation the bit pattern is processed without loss of information.

The first input of the lowest placed adder is preferably allocated a binary 1. In this way, +1 and the two's complement can be formed by an inversion of the serial bit sequence and by supplying the inverted bit sequence to the first input of the adder of the next-higher position of a column. +1 and -1 are in this instance formed in a very simple manner.

In the lowest placed row of the first matrix, the carry inputs of the adders are allocated a binary 0.

In the lowest placed row of the second matrix, the carry inputs of the adders are allocated a binary 1. Thus, a 1 is added to the inverted output signal of the adders by using the inverse outputs of the flip-flops, which represent the one's complement, so that the signal that is returned from the flip-flops to the second input of the adders represents the two's complement, so that the adders operate as subtractors.

The first matrix can operate at a high clock rate, whereas the second matrix operates at a lower clock rate. The serial high-frequency bit sequence thus becomes a parallel low-frequency bit sequence. The subsequent signalprocessing can then be performed by a microprocessor.

Instead of constructing the differentiating elements of the second matrix as separate components, it is alternatively possible to realize the second matrix as a microprocessor, which is programmed to execute the differentiations following the integration. This has the advantage that the signal frequency after integration of the digitized signal is reduced, so that a fast microprocessor can now operate in real time, yet still be of simple and inexpensive construction.

The parameters of the filter arrangement are preferably variable in dependence on the application of the flow meter. In this way, all signals formed by the multiplication of the sum frequency can be filtered out, so that only signals of the difference frequency remain.

The computation circuit can determine the phase difference of the sensor signals in a simple manner according

to the relation

$$\varphi = arc \quad \tan \frac{bc - ad}{ac + bd}$$

in which a and b are the output signals of the filter arrangement after multiplication of the one sensor signal and c and d are the output signals of the filter arrangement after multiplication of the other sensor signal.

The invention is explained hereinafter in greater detail with reference to the accompanying drawings of exemplary embodiments, in which

Fig. 1 is a block circuit diagram of an exemplary embodiment of the circuit arrangement of a mass flow meter in accordance with the invention,

Figs 2 and 3 show two embodiments of a sigma-to-delta converter contained in the circuit arrangement according to Fig. 1,

Fig. 4 is a simplified block circuit diagram of a Hogenauer decimator, and

Fig. 5 is a more detailed block circuit diagram of a Hogenauer decimator.

The mass flow meter according to Fig, 1 has two measuring tubes 20, 21 which are caused to oscillate in anti-phase by an actuator 22. The difference in amplitude of the oscillations of the two tubes 20, 21 is measured by two sensors 23 and 24 arranged at different points between the tubes 20, 21. The sensor signals are supplied by way of measurement lines to amplifiers 25 and 26, which at the same time provide high impedance matching.

The amplified sensor signals $S_1$ and $S_2$ are supplied by way of signal lines 30, 31 to a respective sigma-to-delta converter 32, 33 in analogue-to-digital converters 36, 37. From the sigma-to-delta converters 32, 33 the digitized sensor signals are supplied to a respective Hogenauer decimator 34, 35 in the analogue-to-digital converters 36, 37. The digitized sensor signals are then multiplied with similarly digitized signals I and R in multipliers 38, 39, 40, and 41 of a multiplier circuit M. The signals I and R have approximately the same frequency as the sensor signals $S_1$ and $S_2$, and are phase-displaced by 90° relative to one another. On each of the multiplications, sum and difference frequency signals are obtained, of which the sum frequency signals are filtered out by downstream digital low-pass filters 42, 43, 44, 45 of a filter arrangement F. The low-frequency signals a, b, c and d allowed through by the low-pass filters are mutually out-of-phase sinusoidal signals in digital form, which correspond to the original sensor signals, but of a very much lower frequency. The actual flow values are then calculated from the signals a to d in a computation circuit 46 in the form of a microprocessor, which also generates the signals I and R in dependence on the digital sensor signals appearing in the decimators.

The mathematical derivation of the phase difference or phase shift $\varphi$ between the sensor signals $S_1$ and $S_2$ will be considered in the following.

Assuming a sinusoidal characteristic for the sensor signals, then these can be represented as follows

$$S_1 = g \cdot \sin(\omega t) \qquad [1]$$

$$S_2 = h \cdot \sin(\omega t + \varphi) \qquad [2]$$

g and h being the respective amplitudes and $\omega$ being the fundamental frequency of the sensor signals and t being the time variable. Let the sensor signal $S_2$ be shifted out of phase with respect to the sensor signal $S_1$ by the phase difference $\varphi$.

The output signals I and R of the computation circuit 46 phase-displaced by 90° each have the same amplitude x and approximately the same frequency $\omega$ as the sensor signals, but vary from this frequency by a slight amount $\Delta\omega$. For the signals I and R the following equations can therefore be declared.

$$I = x \cdot \sin\left(\omega t + \Delta \omega t\right) \qquad [3]$$

$$R = x \cdot \cos\left(\omega t + \Delta \omega t\right) \qquad [4]$$

According to the general trigonometric relation

$$\sin \alpha \cdot \cos \beta = \frac{1}{2}\sin\left(\alpha + \beta\right) + \frac{1}{2}\sin\left(\alpha - \beta\right) \qquad [5]$$

the following equations are then true for the output signal A of the multiplier 38

$$A = S_1 \cdot R = g \cdot \sin\left(\omega t\right) \cdot x \cdot \cos\left(\omega t + \Delta \omega t\right) \qquad [6]$$

$$A = \frac{1}{2} g \cdot x \cdot \sin(2\omega t + \Delta \omega t) + \frac{1}{2} g \cdot x \cdot \sin(-\Delta \omega t) \qquad [7]$$

In the low-pass filter 42 the component of the signal A having the sum frequency is suppressed, so that the following relation is true for the output signal of the low-pass filter 42:

$$a = -\frac{1}{2} g \cdot x \cdot \sin(\Delta \omega t) \qquad [8]$$

With the equations [1] and [3] the following relation is true for the output signal B of the multiplier 40:

$$B = S_1 \cdot I = g \cdot \sin\left(\omega t\right) \cdot x \cdot \sin\left(\omega t + \Delta \omega t\right) \qquad [9]$$

According to the general trigonometric relation

$$\sin \alpha \cdot \sin \beta = \frac{1}{2}\cos\left(\alpha - \beta\right) - \frac{1}{2}\cos\left(\alpha + \beta\right) \qquad [10]$$

the following is then true

$$B = \frac{1}{2} g \cdot x \cdot \cos(-\Delta \omega t) - \frac{1}{2} g \cdot x \cdot \cos(2\omega t + \Delta \omega t) \qquad [11]$$

In the low-pass filter 44 the component of the signal B having the higher frequency is then again suppressed so that

$$b = \frac{1}{2} g \cdot x \cdot \cos(\Delta \omega t) \qquad [12]$$

is allowed through as output signal.

The following relations then apply analogously for the output signals D and C of the multipliers 41 and 39 and the corresponding output signals d and c of the low-pass filters 43 and 45:

$$D = S_2 \cdot I = h \cdot \sin(\omega t + \varphi) \cdot x \cdot \sin(\omega t + \Delta \omega t) \qquad [13]$$

$$D = \frac{1}{2} h \cdot x \cdot \cos(\varphi - \Delta \omega t) - \frac{1}{2} \cdot h \cdot x \cdot \cos(2\omega t + \varphi + \Delta \omega t) \qquad [14]$$

$$d = \frac{1}{2} h \cdot x \cdot \cos(\varphi - \Delta \omega t) \qquad [15]$$

$$C = S_2 \cdot R = h \cdot \sin(\omega t + \varphi) \cdot x \cdot \cos(\omega t + \Delta \omega t) \qquad [16]$$

$$C = \frac{1}{2} h \cdot x \cdot \sin(2\omega t + \varphi + \Delta \omega t) + \frac{1}{2} h \cdot x \cdot \sin(\varphi - \Delta \omega t) \qquad [17]$$

$$c = \frac{1}{2} h \cdot x \cdot \sin(\varphi - \Delta \omega t) \qquad [18]$$

If the quotients of the output signals a and b on the one hand and c and d on the other hand are then formed, the following relations are obtained:

$$\frac{a}{b} = -\tan(\Delta\omega t) \qquad\qquad [19]$$

$$\frac{c}{d} = -\tan(\Delta\omega t - \varphi) \qquad\qquad [20]$$

If the inverse functions of the equations [19] and [20] are formed, one obtains, respectively:

$$\Delta\omega t = \arctan(-\frac{a}{b}) \qquad\qquad [21]$$

$$\Delta\omega t - \varphi = \arctan(-\frac{c}{d}) \qquad\qquad [22]$$

and thus, by subtraction of the equations [21] and [22],

$$\varphi = \arctan(-\frac{a}{b}) - \arctan(-\frac{c}{d}) \qquad\qquad [23]$$

and according to the general trigonometric relation

$$\arctan y - \arctan z = \arctan\frac{y - z}{1 + yz} \qquad\qquad [24]$$

for the phase difference

$$\varphi = \arctan\frac{bc - ad}{ac + bd} \qquad\qquad [25]$$

The phase difference $\varphi$ is a measure of the mass flow, which can be indicated digitally on a display after a corresponding calibration.

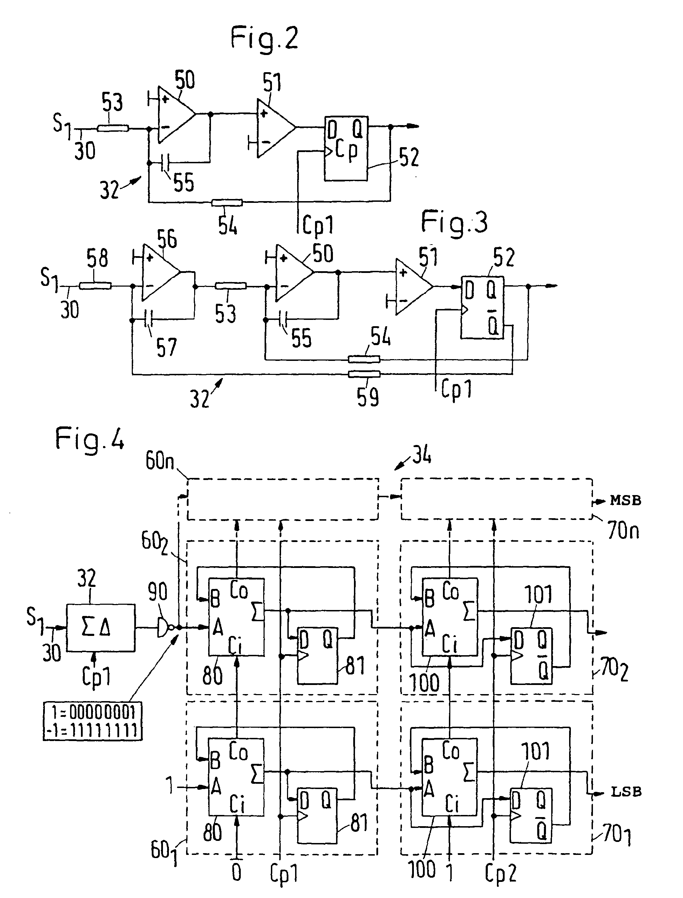

Fig. 2 illustrates an exemplary embodiment of the sigma-to-delta converter 32 in the form of a first-order sigma-to-delta converter. The sigma-to-delta converter 33 can be of similar construction.

The sigma-to-delta converter 32 according to Fig. 2 contains an integrator, which is in the form of a so-called Miller integrator having an operational amplifier 50, an ohmic input resistance 53, which is connected to the inverting input of the operational amplifier 50, and a capacitor 55 between the inverting input and the output of the operational amplifier 50. The non-inverting input of the operational amplifier 50 is at ground potential. The output of the operational amplifier 50 is connected to the non-inverting input of a downstream operational amplifier 51, the inverting input of which is likewise at ground potential. The operational amplifier 51 is in the form of a Schmitt trigger or bistable comparator, the threshold value of which corresponds to ground potential. The binary output signal of the operational amplifier 51 is supplied to the data input D of a flip-flop 52, a so-called D-type flip-flop, the "true" or non-inverting output Q of which is

7

connected firstly to the inverting input of the operational amplifier 51 and secondly to the input of the downstream Hogenauer decimator 34 by way of a resistance 54. Each bit of the serial bit sequence at the output of the comparator 51 is clocked by a clock pulse Cp1 of a clock pulse generator, not illustrated, into the flip-flop 52, the clock frequency at 1 MHz being very much higher than the maximum frequency of the analogue sensor signal $S_1$. In other words, the sigma-to-delta converter 32 effects an over-sampling of the analogue sensor signal $S_1$. The serial bit sequence for the phase difference appearing at the output Q of the flip-flop 52 is returned to the inverting input of the operational amplifier 50 and is there superimposed on the sensor signal $S_1$.

The sigma-to-delta converter 32 according to Fig. 2 can be taken as an I-control loop, which by virtue of the comparator 51 has a high loop gain, so that interference signals coupled into this loop, especially digitization noise occurring as a result of digitization, are also largely compensated for. The sigma-to-delta converter therefore produces a digital output variable which corresponds very accurately and largely without error to the value of the sensor signal $S_1$. Construction is nevertheless very simple.

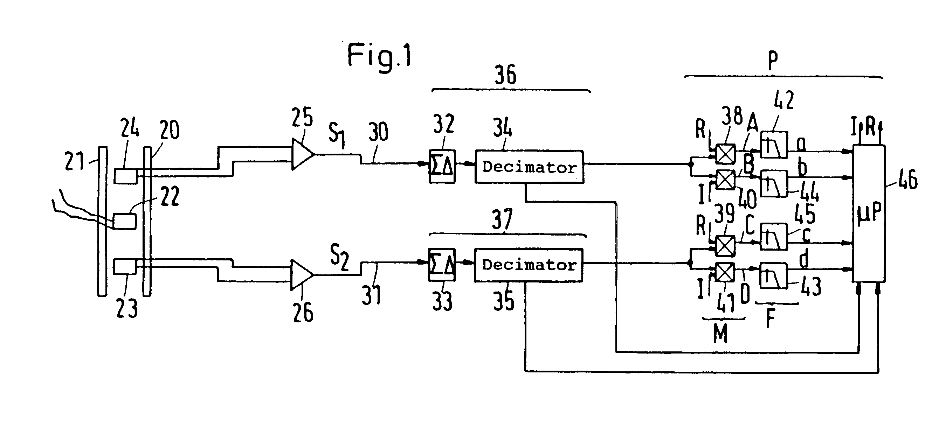

Fig. 3 illustrates a further embodiment of the sigma-to-delta converter 32 illustrated in Fig. 1, which differs from that shown in Fig. 2 merely in that an additional Miller integrator in the form of an operational amplifier 56 with a feedback capacitor 57 and an input resistance 58 is connected upstream of the input resistance 53 and the inverting output $\bar{Q}$ is connected to the inverting input of the operational amplifier 56 by way of an ohmic resistance 59. The sigma-to-delta converter 32 according to Fig. 3 is a second-order sigma-to-delta converter, in which double integration is effected and which consequently compensates even better for any interference signals and digitization noise. The two Miller integrators can have different integration constants. For the rest, the sigma-to-delta converter 32 according to Fig. 3 has the same function as the sigma-to-delta converter 32 according to Fig. 2.

The sigma-to-delta converter 33 according to Fig. 1 can be of the same construction as the sigma-to-delta converter 32 according to Fig. 2 or Fig. 3.

Fig. 4 illustrates a simple construction of the decimator 34 according to Fig. 1 connected downstream of the sigma-to-delta converter 32. It is a so-called Hogenauer decimator. In each of n rows of a first matrix of m columns and n rows, where m = 1, it contains a digital integrator $60_1$, $60_2$, ....$60_n$, downstream of which there is connected a respective differentiating element $70_1$, $70_2$,.... $70_n$ in a second matrix of m columns and n rows, where also m = 1. The number n corresponds on the other hand to the number of bit positions of the parallel bit patterns or bit combinations, which correspond to a sampling value of the sigma-to-delta converter 32 and 33 respectively, appearing at the output of the decimator. In Fig. 4 the first (lowermost) row is allocated to the least significant bit (LSB) and the $n^{th}$ (topmost) row is allocated to the most significant bit (MSB).

Each integrator $60_1$ to $60_n$ contains an adder 80 having two summing inputs A and B, a summation output $\Sigma$, a carry input Ci and a carry output Co and also a flip-flop 81, in this case a D-type flip-flop. In each integrator $60_1$ to $60_n$ the summation output $\Sigma$ of the adder 80 is connected to the data input D of the flip-flop 81, and the output Q of the flip-flop 81 is connected to the summing input B. The summing input A of the adder 80 of the lowest bit position is allocated a binary 1 and its carry input Ci is allocated a binary 0. The carry outputs Co are each connected to the carry input Ci of the adder 80 for the next-higher bit position. The summing inputs A of the adders 80 of the integrators $60_2$ to $60_n$ are, however, connected jointly by way of a NOT-element 90 to the output of sigma-to-delta converter 32. The clock pulses Cp1 supplied to the clock inputs of the flip-flops 81 are the same as those supplied to the sigma-to-delta converter 32.

The differentiating elements $70_1$ to $70_n$ likewise each contain an adder 100 and a flip-flop 101 in the form of a D-type flip-flop. The summing inputs A of all adders 100 are each connected to the summation output $\Sigma$ of the adders 80 of the same row and to the data input D of the flip-flop 101 of the same differentiating element $70_1$ to $70_n$. Conversely, the inverse outputs $\bar{Q}$ of the flip-flops 101 are connected to the summing input B of the adder 100 of the same differentiating element. The carry input Ci of the adder 100 of the differentiating element $70_1$ of the lowest bit position is allocated a binary 1, whilst the carry outputs Co of all adders 100 are connected to the carry input Ci of the adder 100 of the next-higher binary position. The summation outputs $\Sigma$ of the adders 100 simultaneously form the outputs of the decimator 34. On the other hand, clock pulses Cp2 of a very much lower pulse frequency than that of the clock pulses Cp1 are supplied to the clock inputs of all flip-flops 101. In the illustrated embodiment the clock pulses Cp2 have a frequency of 125 kHz.

The decimator shown in Fig. 4 operates so that the bits of the serial bit sequence from the output of the sigma-to-delta converter 32 are inverted by the NOT-element 90 and supplied to the inputs of all integrators $60_2$ to $60_n$ in parallel (simultaneously). Since the summing input A of the adder 80 of the lowest bit position is allocated a binary 1, and the summing inputs A of the remaining adders 80 are simultaneously supplied either with a binary 1 or a binary 0, this means, in the case of, for example, n = 8 rows and accordingly eight adders 80, that only the two binary values "00000001" or "11111111" are supplied to the summing inputs A, "11111111" being the two's complement to "00000001". This means that each time a 0 appears at the output of the NOT-element 90, with a clock pulse Cp1 occurring simultaneously, a 1 (00000001) is added to the previous addition result and on the appearance of a 1 at the output of the NOT-element 90 its two's complement is added, that is, a 1 is subtracted.

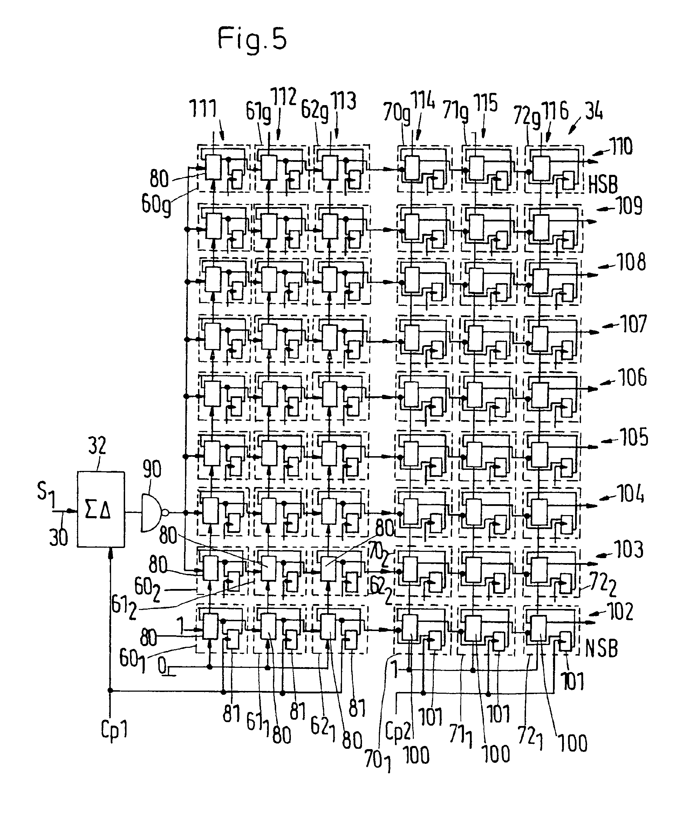

Fig. 5 illustrates a further exemplary embodiment of the decimator 34 in the form of an expanded Hogenauer decimator, which comprises a first matrix of rows 102 to 109 and m = 3 columns 111 to 113 and a matrix comprising n = 9 rows 102 to 110 and m = 3 columns 114 to 116.

In each column 111 to 113 the first matrix contains integrators $60_1$ to $60_9$, $61_1$ to $61_9$ and $62_1$ to $62_9$. The integrators $60_1$ to $62_9$ are all of the same construction as the integrators according to Fig. 1; in this case also the one summing input of the adder 80 of the integrator $60_1$ of the least-significant bit is allocated a binary 1 and the carry inputs of the adders 80 of all integrators $60_1$ to $62_1$ are allocated a binary 0. Furthermore, the one summing inputs of the adders 80 of the integrators $60_2$ to $60_9$ of the first column 111 are all connected in parallel to the output of the NOT-element 90, the summation outputs of all adders 80 of a column are connected to the one summing input of the adder 80 of the next column and the same row, and the carry outputs of all adders 80 of a row are connected to the carry inputs of the adders 80 of the next row and the same column. All clock inputs of the flip-flops 81 are supplied with clock pulses Cp1 of the relatively high frequency of 1 MHz.

In each column 114 to 116 the second matrix contains a differentiating element $70_1$ to $70_9$, $71_1$ to $71_9$, $72_1$ to $72_9$, all of which are of the same construction as the differentiating elements according to Fig. 4. Here too, the carry inputs of all adders 100 of the lowest binary position in the row 102 are allocated a binary 1 and each of the summation outputs of the adders 100 of the two columns 114 and 115 are connected to the one summing input of the adders 100 of the next column and the same row, whilst the inverse outputs of the flip-flops 101 of a respective column are connected to the other summing input of the adders 100 of the same column and row, and the summation outputs of the adders 100 of the last column form the outputs of the decimator 34. The carry outputs of the adders 100 of a row are connected to a respective one of the carry inputs of the next row and the same column, and the one summing inputs of the adders 100 in the column 114 are connected to a respective summation output of the adders 80 in the last column 113 of the first matrix. The clock pulses Cp2 of the relatively low frequency of 125 kHz are supplied to the clock inputs of all flip-flops 101.

The mode of operation of the decimator 34 according to Fig. 5 is fundamentally the same as that of the decimator 34 according to Fig. 4, except that in each row 102 to 110 of the first matrix three digital integrators are connected in series, and in each row 102 to 110 of the second matrix three digital differentiating elements are connected in series, so that in the first matrix a triple integration takes place and in the second matrix a triple differentiation takes place, and in this manner interference signals and the digitization noise of the sigma-to-delta converter 32 are even further reduced.

Here too, the second decimator 35 in Fig. 2 can also be of the same construction as the decimator 34 according to Fig. 4.

The signals I and R are not locked in phase with the sensor signals, but could be so locked in phase. Furthermore, they can have a frequency that is fixed, but it can also be variable in steps.

Although the filtering arrangement F in the exemplary embodiment illustrated contains low-pass filters 42 to 45, it may also contain band pass filters instead of the low-pass filters, the pass frequency range being matched also in this case to the difference frequency $\Delta\omega$.

**Claims**

1. Circuit arrangement for deriving the measured variable from the signals ($S_1$ to $S_2$) of at least two sensors (23, 24) of a flow meter, which flow meter comprises a fluid line or several parallel fluid lines (20, 21) and means (22) for exciting oscillations of a predetermined fundamental frequency ($\omega$) in the fluid line(s), the sensors (23, 24) detecting the oscillations and the sensor signals ($S_1$ to $S_2$) being supplied by way of a respective A-D converter (36; 37) to a digital processing unit (P) having a computation circuit (46), in which their phase difference ($\varphi$) is determined as a measure of the flow, the circuit arrangement comprising the at least two sensors (23, 24), the means (22) for exciting oscillations and the processing unit (P), **characterized in that** the processing unit (P) between the A-D converter (36; 37) of each sensor signal ($S_1$, $S_2$) and the computation circuit (46) comprises a digital multiplier circuit (M) and a digital band-pass or low-pass filter arrangement (F) downstream thereof, the digital sensor signals ($S_1$, $S_2$) are multiplied in the multiplier circuit (M) with respective digital signals (I, R) phase-displaced by 90° with respect to one another that represent sinusoidal oscillations of identical amplitude (x) and of a frequency ($\omega + \Delta\omega$) that varies by a slight difference frequency ($\Delta\omega$) from the fundamental frequency ($\omega$), and the pass band of the filter arrangement (F) is matched to the difference frequency ($\Delta\omega$).

2. Circuit arrangement according to claim 1, **characterized in that** each A-D converter (36; 37) comprises a sigma-to-delta converter (32; 33) and a decimator (34; 35) connected downstream thereof.

3. Circuit arrangement according to claim 2, **characterized in that** the decimator (34; 35) comprises a Hogenauer circuit having a first matrix of digital integrators ($60_1$-$60_9$, $61_1$-$61_9$, $62_1$-$62_9$) followed by a corresponding second matrix of digital differentiating elements ($70_1$-$70_9$, $71_1$-$71_9$, $72_1$-$72_9$) .

4. Circuit arrangement according to claim 3, **characterized in that** the first matrix consists of m columns (111-113) and n rows (102-110) of integrators, each of which comprises an adder (80) having a first and a second summing input (A, B), a carry input (Ci), a summation output ($\Sigma$) and a carry output (Co), the summation outputs ($\Sigma$) being connected in each case to the first summing input (A) of a following adder (80) of the same row and the carry outputs (Co) of the adders (80) of the same columns being connected in each case to the carry input (Ci) of the adder (80) of the next-higher bit position, and each integrator comprising a flip-flop (81) having a data input (D) and at least one output (Q), the signal being transferred from the data input (D) to the output (Q) of the flip-flop (81) when a clock pulse (Cp1) at a clock input of the flip-flop (81) changes value, and the summation output ($\Sigma$) of the adder (80) of the relevant integrator being connected to the data input (D) of the flip-flop (81) and the output (Q) of the flip-flop (81) being connected to the second summing input (B) of the adder (80) of the same integrator.

5. Circuit arrangement according to claim 3 or 4, **characterized in that** the second matrix consists of m columns (114-116) and n rows (102-110) of differentiating elements ($70_1$-$70_9$, $71_1$-$71_9$, $72_1$-$72_9$), each of which comprises an adder (100) having two summing inputs (A-B), a carry input (Ci), a summation output ($\Sigma$) and a carry output (Co), the summation outputs ($\Sigma$) in each case being connected to a first summing input (A) of a following adder (100) of the same row and the carry outputs (Co) of the adders (100) of the same columns being connected in each case to the carry input (Ci) of the adder (100) of the next-higher bit position, and each differentiating element comprising a flip-flop (101) having a data input (D) and at least one output ($\bar{Q}$), the signal being transferred inverted from the data input (D) to the output ($\bar{Q}$) of the flip-flop (101) when a clock pulse at a clock input of the flip-flop (101) changes value, the data input of the flip-flop (101) being connected to the first summing input (A) of the adder (100) of the relevant differentiating element and the output ($\bar{Q}$) of the flip-flop (101) being connected to the second summing input (B) of the adder (100) of the same differentiating element.

6. Circuit arrangement according to any one of claims 3 to 5, **characterized in that**, in the first column (111) of the first matrix, the first summing inputs (A) of the adders (80), except for the adder (80) of the lowest order bit position, is connected to a common input for a serial bit sequence.

7. Circuit arrangement according to any one of claims 4 to 6, **characterized in that** parallel bit patterns for +1 and -1 are entered in the inputs of the decimators (34; 35) in dependence on the instantaneous value for the serial bit sequence, -1 being entered as the two's complement to 1.

8. Circuit arrangement according to any one of claims 4 to 7, **characterized in that** the first input (A) of the lowest placed adder is allocated a binary 1.

9. Circuit arrangement according to any one of claims 4 to 8, **characterized in that** in the lowest placed row (102) of the first matrix, the carry inputs (Ci) of the adders (80) are allocated a binary 0.

10. Circuit arrangement according to any one of claims 4 to 9, **characterized in that** in the lowest placed row (102) of the second matrix, the carry inputs (Ci) of the adders (100) are allocated a binary 1.

11. Circuit arrangement according to any one of claims 4 to 10, **characterized in that** the first matrix operates at a high clock rate and the second matrix operates at a lower clock rate.

12. Circuit arrangement according to claim 3 or 4, **characterized in that** the second matrix is in the form of a microprocessor.

13. Circuit arrangement according to claim 12, **characterized in that** the parameters of the filter arrangement (F) are variable in dependence on the application of the flow meter.

14. Circuit arrangement according to any one of claims 1 to 13, **characterized in that** the computation circuit (46) determines the phase difference ($\varphi$) of the sensor signals ($S_1$, $S_2$) according to the relation

$$\varphi = \arctan \frac{bc - ad}{ac + bd}$$

in which a and b are the output signals of the filter arrangement (F) after multiplication of the one sensor signal ($S_1$) and c and d are the output signals of the filter arrangement (F) after multiplication of the other sensor signal ($S_2$).

**Patentansprüche**

1. Schaltungsanordnung zum Ableiten der Meßvariable von den Signalen ($S_1$ bis $S_2$) von mindestens zwei Sensoren (23, 24) eines Durchflußmeßgeräts, wobei das Durchflußmeßgerät eine Fluidleitung oder mehrere parallele Fluidleitungen (20, 21) und Mittel (22) zum Erregen von Schwingungen einer vorbestimmten Grundfrequenz ($\omega$) in der oder den Fluidleitung(en) umfaßt, wobei die Sensoren (23, 24) die Schwingungen und die Sensorsignale ($S_1$ bis $S_2$) detektieren, die über einen jeweiligen A-D-Umsetzer (36; 37) an eine digitale Verarbeitungseinheit (P) mit einer Berechnungsschaltung (46) geliefert werden, in denen ihre Phasendifferenz ($\varphi$) als ein Maß des Flusses bestimmt wird, wobei die Schaltungsanordnung die mindestens zwei Sensoren (23, 24), die Mittel (22) zum Erregen von Schwingungen und die Verarbeitungseinheit (P) umfaßt, **dadurch gekennzeichnet, daß** die Verarbeitungseinheit (P) zwischen dem A-D-Umsetzer (36; 37) jedes Sensorsignals ($S_1$, $S_2$) und der Berechnungsschaltung (46) eine digitale Multipliziererschaltung (M) und eine digitale Bandpaß- oder Tiefpaßfilteranordnung (F) dem nachgeschaltet umfaßt, wobei die digitalen Sensorsignale ($S_1$, $S_2$) in der Multipliziererschaltung (M) mit jeweiligen zueinander um 90° phasenversetzten digitalen Signalen (I, R) multipliziert werden, die sinusförmige Schwingungen von identischer Amplitude (x) und mit einer Frequenz ($\omega + \Delta\omega$) darstellen, die um eine geringfügige Differenzfrequenz ($\Delta\omega$) von der Grundfrequenz ($\omega$) variiert, und das Durchlaßband der Filteranordnung (F) an die Differenzfrequenz ($\Delta\omega$) angepaßt ist.

2. Schaltungsanordnung nach Anspruch 1, **dadurch gekennzeichnet, daß** jeder A-D-Umsetzer (36; 37) einen Sigma-zu-Delta-Konverter (32; 33) und einen dazu nachgeschalteten Dezimator (34; 35) umfaßt.

3. Schaltungsanordnung nach Anspruch 2, **dadurch gekennzeichnet, daß** der Dezimator (34; 35) eine Hogenauer-Schaltung mit einer ersten Matrix von digitalen Integratoren ($60_1$-$60_9$, $61_1$-$61_9$, $62_1$-$62_9$) aufweist, gefolgt von einer entsprechenden zweiten Matrix von digitalen Differenzierungselementen ($70_1$-$70_9$, $71_1$-$71_9$, $72_1$-$72_9$) .

4. Schaltungsanordnung nach Anspruch 2, **dadurch gekennzeichnet, daß** die erste Matrix aus m Spalten (111-113) und n Zeilen (102-110) von Integratoren besteht, die jeweils einen Addierer (80) mit einem ersten und einem zweiten summierenden Eingang (A, B), einen Übertragseingang (Ci), einen Summierungsausgang ($\Sigma$) und einen Übertrags-ausgang (Co) umfassen, wobei die Summierungsausgänge ($\Sigma$) in jedem Fall mit dem ersten summierenden Eingang (A) eines folgenden Addierers (80) der gleichen Reihe verbunden sind und die Übertragsausgänge (Co) der Addierer (80) der gleichen Spalten in jedem Fall mit dem Übertragseingang (Ci) des Addierers (80) der nächsthöheren Bitposition verbunden sind, und jeder Integrator einen Flipflop (81) mit einem Dateneingang (D) und mindestens einem Ausgang (Q) umfaßt, wobei das Signal von dem Dateneingang (D) zu dem Ausgang (Q) des Flipflops (81) übertragen wird, wenn ein Taktimpuls (Cp1) an einem Takteingang des Flipflops seinen Wert ändert, und wobei der Summierungsausgang ($\Sigma$) des Addierers (80) des relevanten Integrators mit dem Dateneingang (D) des Flipflops (81) verbunden ist und der Ausgang (Q) des Flipflops (81) mit dem zweiten summierenden Eingang (B) des Addierers (80) des gleichen Integrators verbunden ist.

5. Schaltungsanordnung nach Anspruch 3 oder 4, **dadurch gekennzeichnet, daß** die zweite Matrix aus m Spalten (114-116) und n Reihen (102-110) von Differenzierungselementen ($70_1$-$70_9$, $71_1$-$71_9$, $72_1$-$72_9$) besteht, von denen jedes einen Addierer (100) mit zwei summierenden Eingängen (A-B), einen Übertragseingang (Ci), einen Summie-rungsausgang ($\Sigma$) und einen Übertragsausgang (Co) umfaßt, wobei die Summierungsausgänge ($\Sigma$) in jedem Fall mit einem ersten summierenden Eingang (A) eines folgenden Addierers (100) der gleichen Zeile verbunden sind und die Übertragsausgänge (Co) der Addierer (100) der gleichen Spalten in jedem Fall mit dem Übertragseingang (Ci) des Addierers (100) der nächsthöheren Bitposition verbunden sind und jedes Differenzierungselement einen Flipflop (101) mit einem Dateneingang (D) und mindestens einen Ausgang ($\bar{Q}$) umfaßt, wobei das Signal invertiert von dem Dateneingang (D) zu dem Ausgang ($\bar{Q}$) des Flipflops (101) übertragen wird, wenn ein Taktimpuls an einem Takteingang des Flipflops (101) seinen Wert ändert, wobei der Dateneingang des Flipflops (101) mit dem ersten summierenden Eingang (A) des Addierers (100) des relevanten Differenzierungselements verbunden ist und der Ausgang ($\bar{Q}$) des Flipflops (101) mit dem zweiten summierenden Eingang (B) des Addierers (100) des gleichen Differenzierungselements verbunden ist.

6. Schaltungsanordnung nach einem der Ansprüche 3-5, **dadurch gekennzeichnet, daß** in der ersten Spalte (111) der ersten Matrix die ersten summierenden Eingänge (A) der Addierer (80) mit Ausnahme des Addierers (80) der Bitposition niedrigster Ordnung mit einem gemeinsamen Eingang für eine serielle Bitsequenz verbunden sind.

7. Schaltungsanordnung nach einem der Ansprüche 4 bis 6, **dadurch gekennzeichnet, daß** parallele Bitmuster für +1 und -1 in die Eingänge der Dezimatoren (34; 35) in Abhängigkeit von dem Sollwert für die serielle Bitsequenz eingetragen werden, wobei -1 als das Zweier-Komplement von 1 eingetragen wird.

8. Schaltungsanordnung nach einem der Ansprüche 4 bis 7, **dadurch gekennzeichnet, daß** dem ersten Eingang (A) des am niedrigsten plazierten Addierers eine binäre 1 zugewiesen wird.

9. Schaltungsanordnung nach einem der Ansprüche 4 bis 8, **dadurch gekennzeichnet, daß** in der am niedrigsten plazierten Reihe (102) der ersten Matrix den Übertragseingängen (Ci) der Addierer (80) eine binäre 0 zugewiesen wird.

10. Schaltungsanordnung nach einem der Ansprüche 4 bis 9, **dadurch gekennzeichnet, daß** in der am niedrigsten plazierten Reihe (102) der zweiten Matrix den Übertragseingängen (Ci) der Addierer (80) eine binäre 1 zugewiesen wird.

11. Schaltungsanordnung nach einem der Ansprüche 4 bis 10, **dadurch gekennzeichnet, daß** die erste Matrix mit einer hohen Taktrate arbeitet und die zweite Matrix mit einer niedrigeren Taktrate arbeitet.

12. Schaltungsanordnung nach Anspruch 3 oder 4, **dadurch gekennzeichnet, daß** die zweite Matrix in Form eines Mikroprozessors vorliegt.

13. Schaltungsanordnung nach Anspruch 12, **dadurch gekennzeichnet, daß** die Parameter der Filteranordnung (F) in Abhängigkeit von der Anwendung des Durchflußmeßgeräts variabel sind.

14. Schaltungsanordnung nach einem der Ansprüche 1 bis 13, **dadurch gekennzeichnet, daß** die Berechnungsschaltung (46) die Phasendifferenz ($\varphi$) der Sensorsignale ($S_1$, $S_2$) gemäß der folgenden Beziehung bestimmt

$$\varphi = arc\tan \frac{bc - ad}{ac + bd}$$

wobei a und b die Ausgangssignale der Filteranordnung (F) nach der Multiplikation des einen Sensorsignals ($S_1$) sind und c und d die Ausgangssignale der Filteranordnung (F) nach der Multiplikation des anderen Sensorsignals ($S_2$) sind.

**Revendications**

1. Configuration de circuit pour déduire la variable mesurée des signaux ($S_1$ à $S_2$) d'au moins deux capteurs (23, 24) d'un débitmètre, lequel débitmètre comprend une ligne de fluide ou plusieurs lignes de fluide parallèle(s) (20, 21) et un moyen (22) pour exciter des oscillations d'une fréquence fondamentale prédéterminée ($\omega$) dans la ou les ligne (s) de fluide, les capteurs (23, 24) détectant les oscillations et les signaux de capteurs (S1 à S2) étant délivrés par l'intermédiaire d'un convertisseur A-N (36 ; 37) respectif à une unité (P) de traitement numérique ayant un circuit (46) de calcul dans lequel leur différence de phase ($\varphi$) est déterminée en tant que mesure du débit, la configuration de circuit comprenant les au moins deux capteurs (23, 24), le moyen (22) d'excitation d'oscillations et l'unité de traitement (P), **caractérisée en ce que** l'unité de traitement (P) entre le convertisseur A-N (36 ; 37) de chaque signal de capteur ($S_1$, $S_2$) et le circuit (46) de calcul comprend un circuit multiplieur numérique (M) et une configuration de filtre numérique passe-bande ou passe-bas (F) en aval de celui-ci, **en ce que** les signaux de capteurs numériques ($S_1$, $S_2$) sont multipliés dans le circuit multiplieur (M) par des signaux numériques respectifs (I, R) déplacés en phase de 90˚ l'un par rapport à l'autre qui représentent des oscillations sinusoïdales d'amplitude identiques (x) et ayant une fréquence ($\omega + \Delta\omega$) qui varie d'une légère différence de fréquence ($\Delta\omega$) par rapport à la fréquence fondamentale ($\omega$), et **en ce que** la bande passante de la configuration de filtre (F) est adaptée à la fréquence de différence ($\Delta\omega$).

**2.** Configuration de circuit suivant la revendication 1, **caractérisée en ce que** chaque convertisseur A-N (36 ; 37) comprend un convertisseur sigma-delta (32 ; 33) et un décimateur (34 ; 35) connecté en aval de celui-ci.

**3.** Configuration de circuit suivant la revendication 2, **caractérisée en ce que** le décimateur (34 ; 35) comprend un circuit de Hogenauer ayant une première matrice d'intégrateurs numériques ($60_1$-$60_9$, $61_1$-$61_9$, $62_1$-$62_9$) suivis d'une deuxième matrice correspondante d'éléments différentiateurs numériques ($70_1$-$70_9$, $71_1$-$71_9$, $72_1$-$72_9$) .

**4.** Configuration de circuit suivant la revendication 3, **caractérisée en ce que** la première matrice est constituée de m colonnes (111-113) et de n lignes (102-110) d'intégrateurs dont chacun comprend un additionneur (80) ayant des première et deuxième entrées (A, B), une entrée de report (Ci), une sortie de sommation ($\Sigma$) et une sortie de report (Co), les sorties de sommation ($\Sigma$) étant connectées dans chaque cas à la première entrée de sommation (A) de l'additionneur suivant (80) de la même ligne et les sorties de report (Co) des additionneurs (80) des mêmes colonnes étant connectées dans chaque cas à l'entrée de report (Ci) de l'additionneur (80) de la position binaire de poids immédiatement supérieure, et chaque intégrateur comprenant une bascule (81) ayant une entrée de données (D) et au moins une sortie (Q), le signal étant transféré de l'entrée de données (D) à la sortie (Q) de la bascule (81) lorsqu'une impulsion d'horloge (Cp1) sur une entrée d'horloge de la bascule (81) change de valeur, et la sortie de sommation ($\Sigma$) de l'additionneur (80) de l'intégrateur concerné étant connectée à l'entrée de données (D) de la bascule (81) et la sortie (Q) de la bascule (81) étant connectée à la deuxième entrée de sommation (B) de l'additionneur (80) du même intégrateur.

**5.** Configuration de circuit suivant la revendication 3 ou 4, **caractérisée en ce que** la deuxième matrice est constituée de m colonnes (114-116) et de n lignes (102-110) d'éléments différentiateurs ($70_1$-$70_9$, $71_1$-$71_9$, $72_1$-$72_9$) dont chacun comprend un additionneur (100) ayant deux entrées de sommation (A-B), une entrée de report (Ci), une sortie de sommation ($\Sigma$) et une sortie de report (Co), les sorties de sommation ($\Sigma$) étant connectées dans chaque cas à une première entrée de sommation (A) d'un additionneur suivant (100) de la même ligne et les sorties de report (Co) des additionneurs (100) des mêmes colonnes étant connectées dans chaque cas à l'entrée de report (Ci) de l'additionneur (100) de la position binaire immédiatement supérieure, et chaque élément différentiateur comprenant une bascule (81) ayant une entrée de données (D) et au moins une sortie ($\overline{Q}$), le signal étant transféré à l'état inversé de l'entrée de données (D) à la sortie ($\overline{Q}$) de la bascule (101) lorsqu'une impulsion d'horloge sur une entrée d'horloge de la bascule (101) change de valeur, l'entrée de données de la bascule (101) étant connectée à la première entrée de sommation (A) de l'additionneur (100) de l'élément différentiateur concerné et la sortie ($\overline{Q}$) de la bascule (101) étant connectée à la deuxième entrée de sommation (B) de l'additionneur (100) du même élément différentiateur.

**6.** Configuration de circuit suivant l'une quelconque des revendications 3 à 5, **caractérisée en ce que**, dans la première colonne (111) de la première matrice, les premières entrées de sommation (A) des additionneurs (80), à l'exception de l'additionneur (80) de la position binaire de poids le plus faible, sont connectées à une entrée commune pour une séquence binaire série.

**7.** Configuration de circuit suivant l'une quelconque des revendications 4 à 6, **caractérisée en ce que** des séquences binaires parallèles de +1 et de -1 sont fournies en entrée sur les entrées des décimateurs (34 ; 35) d'une façon qui dépend de la valeur instantanée de la séquence binaire en série, un -1 étant fourni en entrée sous la forme d'un complément à deux de 1.

**8.** Configuration de circuit suivant l'une quelconque des revendications 4 à 7, **caractérisée en ce qu'**on alloue à la première entrée (A) de l'additionneur placé le plus bas un 1 binaire.

**9.** Configuration de circuit suivant l'une quelconque des revendications 4 à 8, **caractérisée en ce que** dans la ligne (102) placée le plus bas de la première matrice, on alloue aux entrées de report (Ci) des additionneurs (80) un 0 binaire.

**10.** Configuration de circuit suivant l'une quelconque des revendications 4 à 9, **caractérisée en ce que**, dans la ligne placée le plus bas (102) de la deuxième matrice, on alloue aux entrées de report (Ci) des additionneurs (100) un 1 binaire.

**11.** Configuration de circuit suivant l'une quelconque des revendications 4 à 10, **caractérisée en ce que** la première matrice fonctionne à une fréquence d'horloge élevée et ce que la deuxième matrice fonctionne à une fréquence d'horloge plus faible.

**12.** Configuration de circuit suivant la revendication 3 ou 4, **caractérisée en ce que** la deuxième matrice est sous la forme d'un microprocesseur.

**13.** Configuration de circuit suivant la revendication 12, **caractérisée en ce que** les paramètres de la configuration de filtre (F) peuvent varier en fonction de l'application du débitmètre.

**14.** Configuration de circuit suivant l'une quelconque des revendications 1 à 13, **caractérisée en ce que** le circuit (46) de calcul détermine la différence de phase ($\varphi$) des signaux de capteur (S1, S2) conformément à la relation :

$$\varphi = arctan \frac{bc - ad}{ac + bd}$$

dans laquelle a et b sont les signaux de sortie de la configuration de filtre (F) après multiplication du signal de capteur ($S_1$) et dans laquelle c et d sont les signaux de sortie de la configuration de filtre (F) après multiplication de l'autre signal de capteur ($S_2$).

Fig.1

Fig.2

Fig.3

Fig.4

## Fig.5